# FASCICULE DE BREVET EUROPEEN

(11) **EP 0 478 478 B1**
(45) Date de publication et mention de la délivrance du brevet: **09.11.1994**
(21) Numéro de dépôt: 91420339.3
(22) Date de dépôt: 26.09.1991
(51) Int. Cl.: B23C 3/05

(54) **Procédé et dispositif pour centrer une tige-pilote dans un guide de soupape, en vue de l'usinage de précision d'un siège de soupape**
Verfahren und Vorrichtung zum Zentrieren eines Führungsdorns in eine Ventilführung, für Präzisionsbearbeitung eines Sitzventiles
Process and apparatus for centering a guide pin a valve guide for precision machining of valve seats

(30) Priorité: 28.09.1990 CH 3119/90
(43) Date de publication de la demande: 01.04.1992
(73) Titulaire: SERDI - SOCIETE D'ETUDES DE REALISATION ET DE DIFFUSION INDUSTRIELLES, Annecy (FR)
(72) Inventeur: Siegfried, Ruedi, CH-8430 (CH)
(74) Mandataire: Guerre, Dominique

(56) Documents cités:
- EP-A- 0 344 077
- WO-A-80/01365
- FR-A- 1 555 211
- US-A- 4 899 458

## Description

Lors de l'usinage de sièges de soupapes, notamment sur des moteurs thermiques, on recherche une précision maximale des sièges. Les sièges sont usinés au tour, l'outil de façonnage utilisé étant guidé sur une broche, qui elle-même est guidée par une tige-pilote dans le guide de soupape du siège de soupape à usiner. La précision du siège de soupape qui peut être obtenue par cet usinage dépend directement de l'ajustement fin ou encore de la position de la tige-pilote dans le guide de soupape. Même si cet ajustement est quasiment parfait, on ne peut éviter que la tige-pilote présente un jeu dans le guide de soupape, même si ce jeu est faible. C'est notamment le cas lorsque le guide de soupape est légèrement usé, et donc que son diamètre est élargi vers ses extrémités. La présente invention concerne un procédé et un dispositif permettant de centrer de manière optimum une telle tige-pilote dans un guide de soupape, en se plaçant au centre du jeu existant du pilote dans le guide de soupape.

Conformément au document US-C-4 899 458, on a décrit un dispositif, du type outillage de rectification, permettant l'usinage de précision d'un siège de soupape, en correspondance avec le guide de cette dernière, et permettant un centrage actif de la tige-pilote dans le guide de soupape. Ce dispositif comprend :
- de manière traditionnelle, une broche d'usinage munie d'une tige-pilote, destinée à être introduite dans le guide de soupape ; la broche d'usinage comporte un outil de façonnage, rotatif, du siège de soupape ;
- un support d'ajustement de la broche d'usinage, constitué, d'une part, par une colonne tubulaire avec un socle aimanté, pouvant être déplacé et fixé en translation sur une plaque de fixation, elle-même posée sur la culasse comprenant le ou les sièges de soupape à rectifier, et d'autre part, un bras pivotant, pouvant être déplacé et fixé par rapport à la colonne tubulaire, à la fois en hauteur et en rotation ;
- un organe d'ajustement de la position de la tige-pilote dans le guide de soupape, par rapport au support précité, et plus précisément, par rapport au bras pivotant, comprenant, premièrement, une rotule pivotante et rotative de tous côtés, dans laquelle la broche d'usinage est montée rotative, deuxièmement, deux plaques de serrage entre lesquelles la rotule est montée libre en rotation, elles-mêmes libres en translation et ensemble par rapport au support, et troisièmement, un moyen de serrage des plaques et de la rotule pivotante contre le support ;
- un mécanisme de centrage de la tige-pilote dans le jeu du guide de soupape, comprenant un équipage de commande de l'organe d'ajustement ; ce mécanisme permet de déterminer dans un plan de centrage, deux segments de ligne courbe, s'intersectant, obtenus par le déplacement de la tige-pilote dans le guide de soupape, respectivement selon ces deux lignes courbes, dans la position desserrée du moyen de serrage, puis de placer la tige-pilote au centre de ces deux segments ; à cette fin, l'équipage de commande en centrage comprend, disposés sur le support, deux moyens moteur de la plaque de serrage inférieure, respectivement selon les deux lignes courbes précitées, avec des moyens de contrôle permettant de mesurer la longueur des deux segments précités de ligne courbe, de déterminer la position du milieu desdits segments, et de commander lesdits moyens moteur pour placer la plaque de serrage inférieure au milieu des deux dits segments.

Selon le document US-C-4 899 458, le mécanisme de centrage de la tige-pilote ne permet pas en pratique de positionner cette dernière au centre du jeu du guide de soupape, pour deux raisons inhérentes aux principes retenus :
- les segments permettant de déterminer deux dimensions du jeu dans le guide de soupape sont courbes, et non droits ;
- et le centre géométrique desdits segments ne peut correspondre au centre du jeu précité que dans un cas, à savoir celui où le bord du guide correspond à une ligne fermée ayant deux axes de symétrie identiques au deux lignes courbes précitées s'intersectant ; en pratique, la ligne fermée définie par le bord du guide est quelconque, et orientée de manière indéterminée par rapport aux lignes courbes précitées.

La présente invention a pour objet un mécanisme de centrage rompant avec les principes retenus dans le document US-C-4 899 458, et permettant de déterminer le centre du jeu du guide de soupape, quelle que soit la forme ou orientation de la ligne fermée correspondant au bord dudit guide.

Selon la présente invention, de manière générale, le dispositif selon le préambule de la revendication 1 est caractérisé en ce que l'équipage de commande en centrage est agencé pour, d'abord déterminer dans un plan de centrage une ligne fermée, obtenue par la nutation de la tige-pilote dans le guide de soupape, dans la position desserrée du moyen de serrage des plaques de serrage et de la rotule pivotante, et inscrire cette ligne fermée dans un rectangle ou rhomboïde, puis placer la tige-pilote au centre dudit rectangle ou rhomboïde. A cette fin, l'équipage de centrage comprend :
- deux leviers palpeurs, respectivement pour les longueur et largeur du rhomboïde ou rectangle, munis chacun de deux butées en appui glissant contre la rotule pivotante, montés chacun sur le support de manière mobile en translation, radialement par rapport à la rotule pivotante ;
- deux paires de leviers de centrage, les leviers d'une même paire étant agencés par rapport au support pour être écartés l'un de l'autre sous l'effet de la translation radiale et totale d'un levier palpeur ; les distances d'écartement des deux paires de leviers de centrage correspondent respectivement à la longueur et à la largeur du rectangle ou rhomboïde ;
- un moyen pour fixer les leviers de centrage dans leur position écartée ;
- un moyen pour déplacer les leviers palpeurs au centre respectivement des deux paires de leviers de centrage, fixées et écartées, et corrélativement pour déplacer la tige-pilote au centre du rhomboïde ou du rectangle, par l'intermédiaire de l'organe d'ajustement de la tige-pilote.

Le problème posé à l'invention est représenté sur les dessins annexés, de même qu'un exemple de dispositif selon l'invention. Dans les dessins annexés :
- la figure 1 est une représentation schématique du centrage passif avec des systèmes conventionnels ;
- la figure 2 est une représentation schématique du centrage actif selon l'invention ;
- la figure 3 est une vue d'ensemble d'un dispositif selon l'invention en position d'utilisation ;
- la figure 4 est une vue en projection horizontale du dispositif de centrage ;
- la figure 5 est une vue en projection latérale du dispositif de centrage ;
- la figure 6 est une représentation schématique de la broche d'usinage, munie de l'outil de façonnage, qui est montée dans une rotule pivotante, et de la tige-pilote introduite dans un guide de soupape.

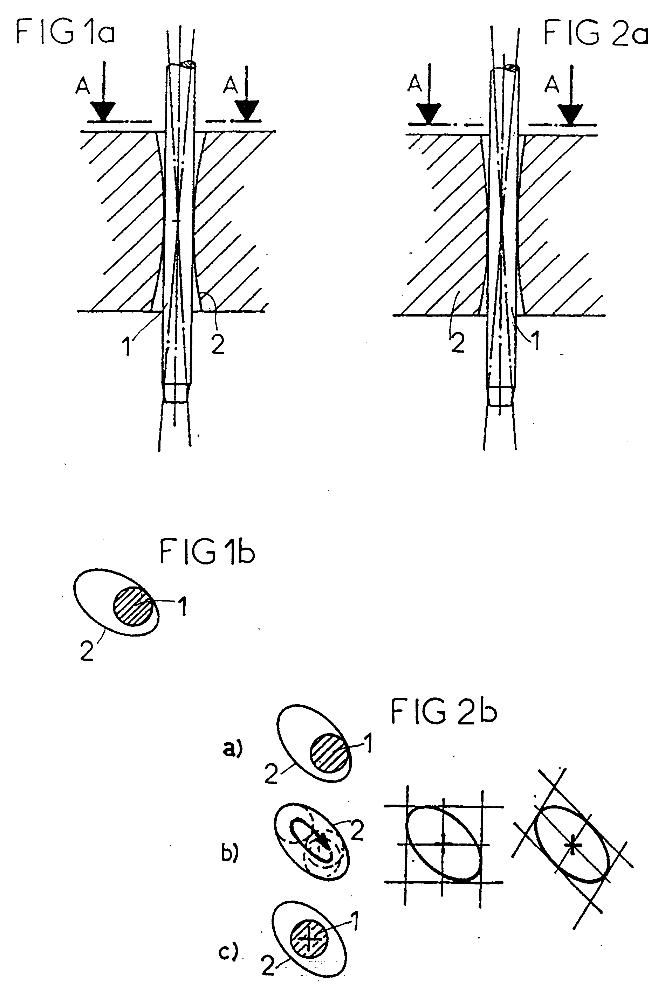

La figure 1 représente schématiquement les systèmes de centrage connus. En figure 1a, on peut voir en coupe transversale un guide de soupape. Une tige-pilote est introduite dans ce guide. Cet état est représenté en dessous, dans une vue en projection dans le sens des flèches A. On distingue l'embouchure supérieure du guide de soupape, qui présente généralement une forme ovale.

On a représenté en figure 1b le centrage passif. La tige-pilote prend une position indéterminée à l'intérieur de son jeu dans le guide de soupape. Le centrage est d'autant plus précis que la tige-pilote est choisie, ajustée, c'est-à-dire qu'elle présente peu de jeu dans le guide de soupape.

Par contre, la figure 2 représente le système de centrage selon la présente invention. On a représenté en figure 2a la position indéterminée de la tige-pilote vers le bord du guide de soupape, à la suite de son introduction dans le guide. En figure 2b, on peut voir le déroulement des mouvements de la tige-pilote dans le guide de soupape, en vue de déterminer le jeu. Comme le montre la flèche, la tige 1 est donc déplacée tout autour du bord du guide de soupape. L'ovale de nutation décrit détermine ainsi les dimensions minimales d'un rectangle ou d'un rhomboïde dans lequel s'inscrit la forme du guide de soupape, comme on peut le voir sur la droite. Enfin, on a représenté en (c) la position de la tige-pilote, à la suite de son centrage, où elle a été placée au centre du rectangle ou rhomboïde déterminé.

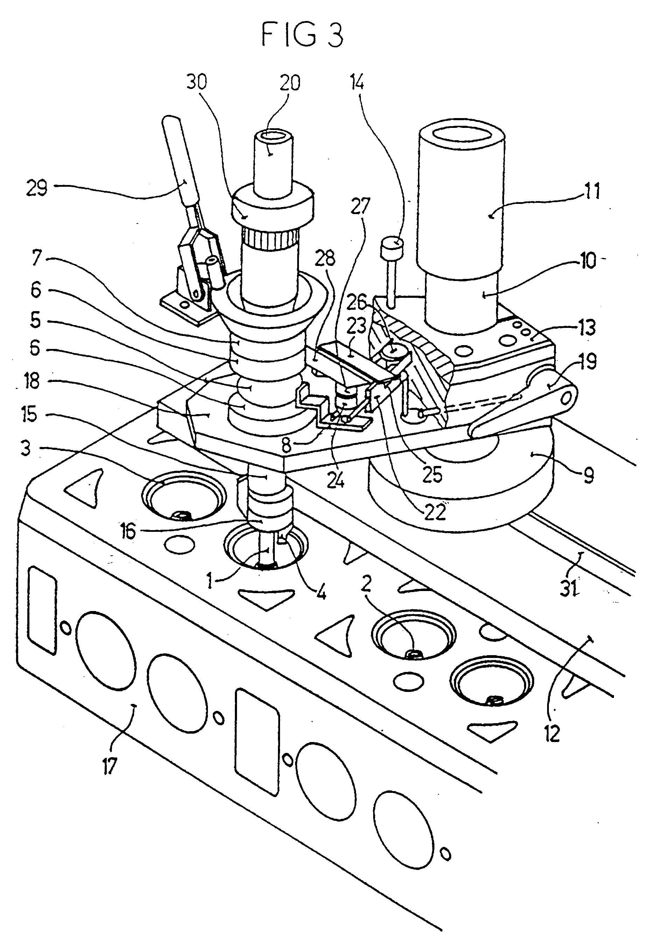

La figure 3 représente un dispositif pour la mise en oeuvre du procédé selon l'invention. La colonne de l'appareil est constituée d'une bride de socle 9 avec un tube porteur 10 et une poignée 11. La bride de socle 9 a un dessous plan et, en position d'utilisation, elle est placée sur un tourillon de fixation déplaçable en translation dans une plaque de fixation 12, et elle est serrée à bloc de manière fixe sur la plaque 12 à l'aide de la poignée 11. Un bras pivotant 13 est articulé au tube porteur 10. A l'aide d'une vis de réglage en hauteur 14, il peut être réglé en hauteur sur le tube porteur 10, et serré en position fixe à l'aide du levier de serrage 19. Une broche d'usinage 15 est guidée à travers l'extrémité du bras pivotant 13. Elle présente un porte-outil 16 pour différents outils 4 de forme avec lesquels sont usinés des sièges de soupape 3. Une culasse 17, munie des sièges de soupape 3 à usiner, est fixée tête en bas sous la plaque de fixation 12. La tige-pilote 1, qui doit servir à guider l'outil de façonnage 4, est ici introduite dans le guide de soupape 2 du siège de soupape 3 à usiner. La broche d'usinage 15 est montée rotative dans une rotule pivotante 5, la rotule pivotante 5 est montée entre deux plaques de serrage 6, et ces plaques de serrage 6 étant elles-mêmes montées libres en translation entre le fond 18 d'un carter et une bague de serrage 7. On comprendra que la broche d'usinage 15 est guidée à travers un perçage du fond 18. La rotule pivotante 5 est déplacée circulairement à la main, mécaniquement, pneumatiquement, hydrauliquement ou électromécaniquement, les deux plaques de serrage 6 se déplaçant horizontalement entre la bague de serrage 7 et le fond 18. La forme du guide de soupape est transmise, par l'intermédiaire de leviers palpeurs 8, sur les leviers de centrage 22. Chaque levier palpeur 8 est pourvu de deux butées en vis-à-vis, 8a et 8b en appui glissant contre la rotule pivotante 5, et chaque levier 8 peut être déplacé en translation radialement par rapport à la rotule pivotante 5. Les leviers de centrage 22 sont maintenus fixés aux positions de centrage par l'intermédiaire d'un pont de serrage 23, et simultanément, par l'intermédiaire de cônes de centrage 24 et des leviers palpeurs 8, la rotule pivotante 5 est placée au centre de la forme reconnue du guide de soupape. Par l'intermédiaire de leviers de serrage 29, on peut maintenant bloquer de manière immuable la rotule pivotante 5 à une position quelconque de pivotement ou de translation. Pour usiner le siège de soupape, la broche d'usinage 15 est mise en rotation par l'intermédiaire d'un adaptateur 20. On peut utiliser à cet effet des entraînements mécaniques, pneumatiques, hydrauliques ou électriques.

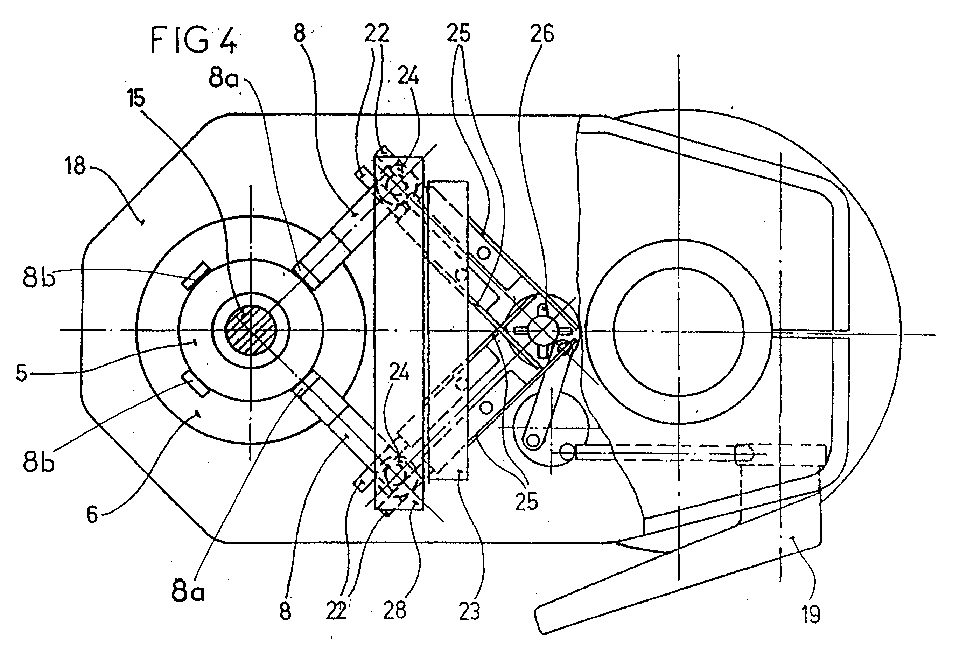

La figure 4 est une vue en projection horizontale, à une plus grande échelle, du mécanisme de centrage. La plaque de serrage inférieure 6 repose sur le fond 18 du carter. La rotule pivotante 5, dans laquelle est montée la broche d'usinage 15, est disposée sur cette plaque. Par l'intermédiaire des deux leviers palpeurs 8, la forme du guide de soupape est transmise sur les leviers de centrage 22. Ces leviers de centrage 22, munis de ressorts à lames 25, sont, par l'intermédiaire d'un arbre à cames 26 actionné par le levier de serrage 19, amenés à la position finale intérieure, ou complètement libérés. Une fois le centrage effectué, le pont de serrage 23 maintient les leviers de centrage 22 fixés à leur position. Dans le même temps, les deux cônes de centrage sont, par l'intermédiaire du ressort 28, enfoncés sur les leviers de centrage bloqués 22, de sorte que les leviers palpeurs 8 déplacent la rotule pivotante 5 à la position correcte.

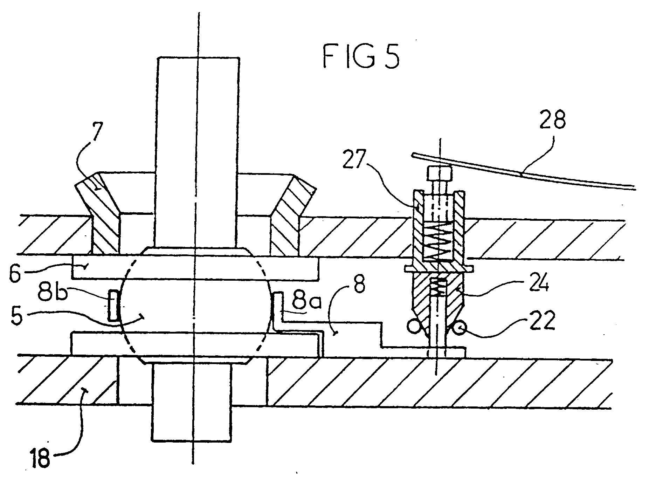

La figure 5 est une vue en coupe des éléments de centrage. On peut surtout y voir la fonction des cônes de centrage 24, qui déplacent la rotule pivotante 5 par l'intermédiaire des leviers palpeurs 8. Les cônes de centrage 24 sont actionnés par l'intermédiaire de verins 27, qui sont munis d'ensembles de ressorts incorporés qui sont eux-mêmes actionnés par l'intermédiaire du ressort de centrage 28.

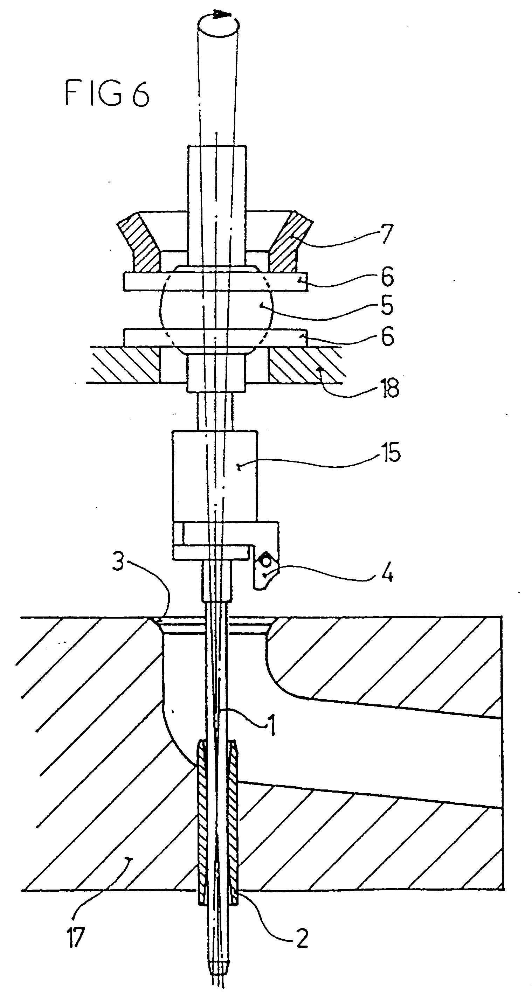

La figure 6 montre schématiquement comment une tige-pilote 1 introduite dans le guide de soupape 2 présente du jeu dans ce dernier. Ce jeu provient d'une part du fait que la précision d'ajustement de la tige-pilote 1 est toujours entâchée d'une erreur, mais aussi du fait que le guide de soupape 2 est usé. Bien sûr, le jeu représenté a des dimensions nettement exagérées, afin de rendre plus clair le problème que résoud l'invention. A l'aide du dispositif de centrage, on peut maintenant placer la tige-pilote à une position centrale à l'ntérieur du jeu de la tige 1, jeu qui, avec un appareil selon l'invention, est intentionnellement choisi pas trop restreint. On se place ainsi également à une position moyenne, par rapport à une éventuelle erreur de la position du plan de rotation décrit par l'outil de façonnage 4 qui effectue l'usinage. Avec le dispositif décrit, le procédé d'usinage selon l'invention se déroule comme suite.

Après avoir fixé la culasse 17, munie des sièges de soupapes 3 à usiner, de façon que les sièges 3 soient dirigés vers le haut, on pose la plaque de fixation 12 et on la serre sur la culasse 17. Le dispositif est maintenant posé par la bride de socle 9 sur la plaque de fixation 12, la tige-pilote 1 dépassant à l'extérieur du guide de soupape 2, vers le bas dans l'espace libre. Après avoir fixé la bride de socle 9 à l'aide de la poignée 11, on réalise tout d'abord, dans une premièr étape (a) du procédé, un centrage grossier de la tige-pilote 1. A cet effet, la rotule pivotante 5 est desserrée dans son support. Par l'intermédiaire du levier de serrage 19, on actionne l'arbre à cames 26 qui, par l'intermédiaire des ressorts à lames 25 fixés sur les leviers de centrage 22, et par l'intermédiaire des leviers palpeurs 8, amène la rotule pivotante 5 à la position centrale. La rotule pivotante 5 se trouve maintenant au milieu de sa plage de translation. Ceci garantit que le jeu ultérieurement établi de la tige-pilote 1 dans le guide de soupape 2 puisse être reconnu par ladite tige, le long du bord de la forme correspondante du guide de soupape, et donc que ce jeu puisse être mesuré dans toutes les directions.

Pour l'étape (b), on desserre, à l'aide de la poignée 11, la bride de socle 9 de la plaque de fixation 12, et on soulève l'appareil. On déplace alors en translation le tourillon de fixation dans le guide en queue d'aronde 31 de la plaque de fixation 12, en direction du siège de soupape à usiner. Puis on introduit la tige-pilote 1 dans le guide de soupape 2, à une hauteur telle que l'outil 4 de façonnage touche presque le siège de soupape, et on pose simultanément la bride de socle 9 sur le tourillon de fixation. A l'aide de la poignée 11, on fixe la bride de socle 9 de manière fixe sur la plaque de fixation 12.

Avec l'étape (c), on effectue maintenant le centrage fin de la tige-pilote 1 dans le guide de soupape 2. A cet effet, à l'aide du levier de serrage 19, on bloque le bras pivotant 3 sur le tube porteur 10 à la hauteur à laquelle l'outil de façonnage 4 touche presque le siège de soupape ; simultanément, le levier de serrage 19 libère les leviers de centrage 22 par l'intermédiaire de l'arbre à cames 26. Par un mouvement circulaire au niveau de la rotule pivotante 5, en exerçant une pression horizontale uniforme dans toutes les directions, à la main ou à l'aide d'un dispositif mécanique, pneumatique, hydraulique ou électromécanique, on reconnaît avec la tige-pilote 1, la forme du guide de soupape. Ce mouvement de nutation est transmis, par l'intermédiaire des leviers palpeurs 8, l'un pour la distance entre les côtés de longueur du rectangle ou rhomboïde selon Fig.2, et l'autre pour la distance entre les côtés de largeur du même rectangle ou rhomboide, sur les leviers de centrage 22 qui ont été libérés. La position finale des leviers de centrage 22 correspond à la jeu de la tige-pilote 1 dans le guide de soupape 2. Par l'intermédiaire du pont de serrage 23, on bloque maintenant les leviers de centrage 22 à leurs positions finales, et on actionne les vérins 27 par l'intermédiaire des ressorts de centrage 28. Par leur déplacement vers le bas, les cônes de centrage 24 sont poussés entre les leviers de centrage bloqués 22, qui placent alors, par l'intermédiaire des leviers palpeurs 8, la rotule pivotante 5, et donc également la tige-pilote 1, exactement dans l'axe central du guide de soupape 2.

A l'étape (d), on actionne les leviers de serrage 29, qui fixent de manière rigide la rotule pivotante 5, par l'intermédiaire de la bague de serrage 7 et des plaques de serrage 6. On peut maintenant entreprendre l'usinage du siège de soupape 3, à l'aide de la broche d'usinage 15 munie de l'outil de façonnage 4, et à l'aide de l'écrou d'avancement 30. Le procédé selon l'invention permet de centrer une tige-pilote 1 avec précision dans un guide de soupape 2. Les centrages sont reproductibles et ils sont réalisés avec une précision quine pouvait pas être atteinte avec les appareils connus. L'invention permet de centrer les tiges-pilotes et d'usiner des sièges de soupape avec une précision extrême.

## Revendications

1. Dispositif pour l'usinage de précision d'un siège (3) de soupape en correspondance avec le guide (2) de soupape, ledit dispositif comprenant :
- une broche d'usinage (15) munie d'une tige pilote (1), destinée à être introduite dans le guide de soupape (2), avec un outil de façonnage (4) rotatif ;
- un organe d'ajustement de la position de la tige-pilote dans le guide de soupape, par rapport à un support (18), comprenant une rotule pivotante (5) et rotative de tous côtés, dans laquelle la broche d'usinage (15) est montée rotative, deux plaques de serrage (6) entre lesquelles la rotule (5) est montée libre en rotation, elles-mêmes libres en translation et ensemble par rapport audit support (18), ainsi qu'un moyen de serrage (7,29) des plaques (6) et de la rotule pivotante (5) contre le support (18) ;
- un mécanisme de centrage de la tige-pilote (1) dans le jeu du guide de soupape, comprenant un équipage de commande dudit organe d'ajustement ;
**caractérisé en ce que** l'équipage de commande en centrage est agencé pour d'abord déterminer dans un plan de centrage, une ligne fermée, obtenue par la nutation de la tige-pilote (1) dans le guide (2) de soupape, dans la position desserrée du moyen de serrage (7), et inscrire cette ligne fermée dans un rectangle ou rhomboïde, puis placer la tige-pilote (1) au centre dudit rectangle ou rhomboïde, et à cette fin, ledit équipage comprend :
- deux leviers palpeurs (8), respectivement pour les longueur et largeur du rhomboïde ou rectangle, munis chacun de deux butées (8a,8b) en appui glissant contre la rotule pivotante (5), montés chacun sur le support (18) de manière mobile en translation, radialement par rapport à la rotule pivotante (5) ;
- deux paires de leviers de centrage (22), les leviers d'une même paire étant agencés par rapport au support (18) pour être écartés l'un de l'autre sous l'effet de la translation radiale et totale d'un levier palpeur (8), les distances d'écartement des deux paires correspondant respectivement à la longueur et à la largeur du rectangle ou rhomboïde ;
- un moyen (23) pour fixer les leviers de centrage (22) dans leur position écartée ;
- un moyen pour déplacer les leviers palpeurs (8) au centre respectivement des deux paires de leviers (22) de centrage fixes et écartés, et corrélativement la tige-pilote (1) au centre du rhomboïde ou du rectangle, par l'intermédiaire de l'organe d'ajustement de la tige-pilote.

2. Dispositif selon la revendication 1, caractérisé en ce que le moyen (23) pour fixer les leviers comprend un pont de serrage qui, à l'aide de moyens de serrage, sollicite en pression les leviers de centrage (22), contre le support (18).

3. Dispositif selon la revendication 1, caractérisé en ce que le moyen de centrage des leviers palpeurs (8) comprend, d'une part deux cônes de centrage (24) montés sur les deux leviers palpeurs respectivement, pouvant chacun être abaissé entre les leviers de centrage (22) d'une même paire, dans la position écartée et fixée desdits leviers de centrage, et d'autre part un moyen (27,28) d'abaissement des cônes de centrage (24).

4. Dispositif selon la revendication 3, caractérisé en ce que le moyen d'abaissement des cônes de centrage (24) comprend des vérins (27) coopérant avec les cônes (24) de centrage, et actionnés par un ressort de centrage (28).

5. Dispositif selon la revendication 3, caractérisé en ce qu'il comprend un moyen de précentrage comprenant un arbre à cames (26) qui, lors de sa rotation, sollicite par ses cames des ressorts à lames (25) reliés aux leviers de centrage (22), de sorte que ces derniers s'appliquent à plat contre un cône de centrage (24).

6. Dispositif selon la revendication 1, caractérisé en ce qu'il comprend un moyen de nutation de la tige-pilote (1) dans le guide de soupape (2).

## Claims

1. Device for the precision machining of a valve seat (3) in register with the valve guide (2), the said device comprising:
- a machining spindle (15) equipped with a guide pin (1), intended to be inserted into the valve guide (2), with a rotary shaping tool (4);
- a member for adjusting the position of the guide pin in the valve guide, with respect to a support (18), comprising a pivoting ball joint (5) which can rotate in all directions, in which the machining spindle (15) is rotationally mounted, two clamping plates (6) between which the ball joint (5) is mounted, so that it is free to rotate, these plates themselves being free in terms of translation and together with respect to the said support (18), as well as a means (7, 29) for clamping the plates (6) and the pivoting ball joint (5) against the support (18);
- a mechanism for centring the guide pin (1) in the clearance of the valve guide, comprising equipment for controlling the said adjustment member;
characterized in that the centring-control equipment is arranged firstly to define, within a centring plane, a closed line obtained by the nutation of the guide pin (1) in the valve guide (2), in the unclamped position of the clamping means (7), and to inscribe this closed line within a rectangle or rhomboid, then to place the guide pin (1) at the centre of the said rectangle or rhomboid and, for this purpose, the said equipment comprises:
- two feeler levers (8), respectively for the length and width of the rhomboid or rectangle, each equipped with two limit stops (8a, 8b) in sliding contact against the pivoting ball joint (5), each one mounted on the support (18) so that it can move in terms of translation, radially with respect to the pivoting ball joint (5);
- two pairs of centring levers (22), the levers of one and the same pair being arranged with respect to the support (18), so as to be moved away from one another under the effect of the radial and total translation of a feeler lever (8), the distances separating the two pairs respectively corresponding to the length and to the width of the rectangle or rhomboid;
- a means (23) for fixing the centring levers (22) in their spaced-apart position;
- a means for moving the feeler levers (8) to the centre respectively of the two pairs of fixed and spaced-apart centring levers (22), and correspondingly for moving the guide pin (1) to the centre of the rhomboid or of the rectangle, by means of the member for adjusting the guide pin.

2. Device according to Claim 1, characterized in that the means (23) for fixing the levers comprises a clamping bridge which, with the aid of clamping means, urges the centring levers (22) to press against the support (18).

3. Device according to Claim 1, characterized in that the means for centring the feeler levers (8) comprises, on the one hand, two centring cones (24) mounted on the two feeler levers respectively, it being possible for each centring cone to be lowered between the centring levers (22) of one and the same pair, in the fixed and moved-apart position of the said centring levers, and, on the other hand, a means (27, 28) for lowering the centring cones (24).

4. Device according to Claim 3, characterized in that the means for lowering the centring cones (24) comprises thrust cylinders (27) interacting with the centring cones (24) and actuated by a centring spring (28).

5. Device according to Claim 3, characterized in that it comprises a precentring means comprising a camshaft (26) which, as it rotates, by means of its cams urges leaf springs (25) connected to the centring levers (22), so that the latter are pressed flat against a centring cone (24).

6. Device according to Claim 1, characterized in that it comprises a means for the nutation of the guide pin (1) in the valve guide (2).

## Patentansprüche

1. Vorrichtung zur Präzisionsbearbeitung eines Ventilsitzes (3) in Übereinstimmung mit der Ventilführung (2), wobei die Vorrichtung umfaßt:
- eine mit einem drehbaren Formstahl (4) versehene Bearbeitungswelle (15), die mit einer Führungsstange (1) versehen ist, die dazu vorgesehen ist, in die Ventilführung (2) eingeführt zu werden;
- ein Organ zum auf einen Träger (18) bezogenen Einstellen der Position der Führungsstange in der Ventilführung, mit einem schwenkbaren und nach allen Seiten drehbaren Kugelgelenk (5), in dem die Bearbeitungswelle (15) drehbar montiert ist, zwei Klemmplatten (6), zwischen denen das Kugelgelenk ungehindert drehbar montiert ist, wobei diese selbst frei bezüglich einer Tranlationsbewegung sind und die Anordnung frei bezüglich des Trägers (18) ist, sowie mit Mitteln (7, 29) zum Klemmen der Platten (6) und des schwenkbaren Kugelgelenkes (5) gegen den Träger (18);
- einen Mechanismus zum Zentrieren der Führungsstange (1) in dem Spiel der Ventilführung, mit einem beweglichen Steuerorgan für das Organ zum Einstellen,
dadurch gekennzeichnet, daß das bewegliche Steuerorgan für die Zentrierung so angeordnet ist, daß es zunächst in einer Zentrierebene eine geschlossene Linie ermittelt, die sich in der gelockerten Position der Mittel (7) zum Klemmen aus der Nutation der Führungsstange (1) in der Ventilführung (2) ergibt, und diese geschlossene Linie in ein Rechteck oder ein Rhomboid einschreibt und danach die Führungsstange (1) in der Mitte dieses Rechteckes oder Rhomboids plaziert, wobei das bewegliche Organ zu diesem Zweck umfaßt:
- zwei Abtasthebel (8) für die Länge bzw. die Breite des Rhomboids oder Rechteckes, wobei die Abtasthebel jeweils mit zwei in gleitender Anlage an dem schwenkbaren Kugelgelenk (5) befindlichen Anschlägen (8a, 8b) versehen sind und jeweils auf bezogen auf das bewegliche Kugelgelenk radial gerichtete, translationsbewegliche Weise auf dem Träger (8) montiert sind;
- zwei Paare von Zentrierhebeln (22), wobei die Hebel desselben Paares bezogen auf den Träger (18) so angeordnet sind, daß sie durch die Wirkung der radialen und gesamten Translationsbewegung eines Abtasthebels (8) voneinander beabstandet werden, wobei die Trennabstände der beiden Paare der Länge bzw. der Breite des Rechteckes oder Rhomboids entsprechen;
- ein Mittel (23) zum Fixieren der Zentrierhebel (22) in ihrer beabstandeten Position;
- ein Mittel zum Verschieben der Abtasthebel (8) in die jeweilige Mitte der beiden Paare von fixierten und beabstandeten Zentrierhebeln (22) und wechselseitig bedingt damit zum Verschieben der Führungsstange (1) in die Mitte des Rhomboids oder Rechteckes, und zwar mittels des Organs zum Einstellen der Führungsstange.

2. Vorrichtung nach Anspruch 1, dadurch gekennzeichnet, daß die Mittel (23) zum Fixieren der Hebel eine Klemmbrücke umfassen, die mit Hilfe der Mittel zum Klemmen die Zentrierhebel (22) unter Druck gegen den Träger (18) belasten.

3. Vorrichtung nach Anspruch 1, dadurch gekennzeichnet, daß die Mittel zum Zentrieren der Abtasthebel (8) einerseits zwei jeweils auf den beiden Abtasthebeln montierte Zentrierkegel (24) umfassen, von denen jeder zwischen die Zentrierhebel (22) desselben Paares abgesenkt werden kann, und zwar in der beabstandeten und fixierten Position der Zentrierhebel, und andererseits ein Mittel (27, 28) zum Absenken der Zentrierkegel (24) aufweisen.

4. Vorrichtung nach Anspruch 3, dadurch gekennzeichnet, daß die Mittel zum Absenken der Zentrierkegel (24) Stellglieder (27) umfassen, die mit den Zentrierkegeln (24) zusammenwirken und über eine Zentrierfeder (28) betätigt werden.

5. Vorrichtung nach Anspruch 3, dadurch gekennzeichnet, daß sie Mittel zur Voreinstellung umfaßt, die eine Nockenwelle (26) umfassen, die während ihrer Drehung über ihre Nocken Blattfedern (25) belastet, die mit den Zentrierhebeln (22) derart verbunden sind, daß die letzteren sich flach an einen Zentrierkegel (24) anlegen.

6. Vorrichtung nach Anspruch 1, dadurch gekennzeichnet, daß sie eine Einrichtung zur Nutation der Führungsstange (1) in der Ventilführung (2) umfaßt.
